# FASCICULE DE BREVET EUROPEEN

(11) **EP 4 687 099 B1**
(45) Date de publication et mention de la délivrance du brevet: **25.11.2026**
(21) Numéro de dépôt: 25193394.1
(22) Date de dépôt: 01.08.2025
(51) Int. Cl.: G06T 7/11

(54) **PROCÉDÉ ET DISPOSITIF DE TRAITEMENT DE DONNÉES MULTIDIMENSIONNELLES DE MICROSCOPIE POUR LE POSITIONNEMENT D'INTERFACE ENTRE ZONES HOMOGÈNES STRUCTURELLEMENT D'UN ÉCHANTILLON DE MATÉRIAU**
VERFAHREN UND VORRICHTUNG ZUR VERARBEITUNG MEHRDIMENSIONALER MIKROSKOPIEDATEN ZUR SCHNITTSTELLENPOSITIONIERUNG ZWISCHEN STRUKTURELL HOMOGENEN BEREICHEN EINER MATERIALPROBE
METHOD AND DEVICE FOR PROCESSING MULTIDIMENSIONAL MICROSCOPY DATA FOR INTERFACE POSITIONING BETWEEN STRUCTURALLY HOMOGENEOUS REGIONS OF A MATERIAL SAMPLE

(30) Priorité: 01.08.2024 FR 2408524
(43) Date de publication de la demande: 04.02.2026
(73) Titulaire: Commissariat à l'Energie Atomique et aux Energies Alternatives, 75015 Paris (FR)
(72) Inventeur: GUEDJ, Cyril, 38054 GRENOBLE CEDEX 9 (FR)
(74) Mandataire: Lavoix

(56) Documents cités:
- EP-A1- 4 303 811
- US-A1- 2022 130 033
- DENNLER NIK ET AL: "Learning-based defect recognition for quasi-periodic HRSTEM images", MICRON, PERGAMON, OXFORD, GB, vol. 146, 3 May 2021 (2021-05-03), XP086580044, ISSN: 0968-4328, [retrieved on 20210503], DOI: 10.1016/J.MICRON.2021.103069

## Description

La présente invention concerne un procédé de traitement de données multidimensionnelles de microscopie pour le positionnement d'interface entre zones homogènes structurellement d'un échantillon de matériau, ainsi qu'un dispositif de traitement de données multidimensionnelles de microscopie associé et un programme d'ordinateur associé.

L'invention se situe dans le domaine du traitement de données multidimensionnelles de microscopie, obtenues par observation d'échantillons composés d'un ou plusieurs matériaux, pour l'analyse de propriétés chimiques et physiques de leurs structures.

L'invention concerne plus particulièrement la métrologie automatisée à partir d'algorithmes spécialisés.

Plus particulièrement, l'invention trouve des applications dans la localisation des interfaces chimiques et/ou structurelles dans des matériaux, par exemple appliquée dans l'inspection de qualité dans une chaîne de production de matériaux et dispositifs.

Par définition, l'interface est la surface de discontinuité formant une frontière commune à deux couches distinctes ou deux zones distinctes. Quand la différence entre les deux zones de nature chimique, alors la frontière est appelée interface chimique. Pour des zones qui se différentient par leur structure, alors l'interface est dite structurelle. Par exemple une macle par réflexion est un cristal complexe, formé de cristaux simples de la même espèce orientés différemment et séparés par une interface purement structurelle, appelée plan de macle.

De manière connue, l'interface joue un rôle déterminant dans le fonctionnement des dispositifs. La physique des dispositifs les plus avancés repose en effet sur l'ingénierie des interfaces. Il est donc fondamental de les mesurer, de les positionner précisément, à partir de mesures d'imagerie telle que la microscopie électronique en transmission.

Il est utile de disposer d'outils performants pour réaliser l'inspection de matériaux, et détecter la présence des interfaces de nature chimique ou structurelle, en phase de calibration ou en phase d'optimisation technologique de divers dispositifs utilisant les matériaux.

L'analyse des interfaces chimiques et/ou structurelles de matériaux par traitement de données de spectres (1D) et d'images (2D) obtenues par microscopie a été développée à cet effet. Le procédé proposé est également valable dans les hyperespaces de dimension supérieure à 3.

Des ensembles de données de spectres et d'images représentatives chacune d'au moins une partie de l'échantillon observé sont obtenues par tout type de caractérisations par microscopie générant un pavé de données à N dimensions (ou données multidimensionnelles), N étant un entier supérieur ou égal à 2, également appelé « datacube ». Ce pavé comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques chimiques et structurelles du matériau de l'échantillon observé, par exemple d'un alignement d'atomes le long de la direction d'observation. Le pavé de données peut également contenir du bruit. Le contraste de l'image peut être relié à la chimie et à la structure de l'échantillon par l'intermédiaire de simulations incluant les paramètres instrumentaux.

Par exemple, s'agissant de l'observation de cristaux, des atomes disposés selon un motif régulier représentent classiquement le maillage cristallin. Le modèle atomique le plus simple est un modèle de sphères dures, qui représente la nature particulaire d'un atome. Les microscopes les plus performants permettent de visualiser les atomes, qui se présentent généralement sous l'image d'une goutte. En deux dimensions, les gouttes sont également appelées taches. En une dimension, les gouttes sont des points. Entre les gouttes se trouvent des signaux et des interférences qui proviennent de la nature essentiellement ondulatoire de la matière.

Mathématiquement, on définit dans ce document une goutte comme étant une composante simplement connexe d'un espace topologique discret, au sens de la topologie générale. Cela signifie que tout lacet tracé dans une goutte peut être réduit par homotopie à un point. Physiquement, on définit une goutte comme le signal électrique produit par les pixels d'un détecteur matriciel suite à l'impact d'une particule (électron, photon, ion, fermions, etc.). La particule est toujours beaucoup plus petite que le pixel, donc la goutte peut toujours se réduire à un point par homotopie, conformément à la définition mathématique de la goutte. Il existe donc un accord précis entre la définition physique et la définition mathématique de la goutte.

Les images et spectres sont par exemple obtenus par microscopie électronique en transmission à haute résolution (HRTEM et HRSTEM et 4D-STEM), microscopie de fluorescence X (HRSTEM-EDX), microscopie de perte d'énergie électronique (HRSTEM-EELS et HRSTEM-VEELS), ptychographie ; microscopie électronique en transmission filtrée en énergie (EF-HRTEM, EF-HRSTEM), microscopie à force atomique (AFM), microscopie à effet tunnel (STM), sonde atomique tomographique ou tomographie électronique ou les futures variantes à base de positrons par exemple. D'autres types de microscopies utilisant des particules chargées sont également concernées, comme la technique de microscopie électronique à balayage (SEM), focused ion beams (FIBs), dual beams (DB) qui incluent des faisceaux d'ions et d'électrons et/ou de positrons.

Pour obtenir les interfaces structurelles, les images de microscopie obtenues sont des images à résolution atomique, c'est-à-dire de résolution spatiale inférieure ou égale à 2 nanomètres. Pour les interfaces chimiques, cette contrainte de dimension ne s'applique pas.

Le procédé de détermination des interfaces structurelles présenté ci-après peut également s'appliquer à d'autres techniques plus conventionnelles telles que la microscopie optique et toutes les variantes d'imagerie de manière plus générale, par exemple dans le domaine spatial.

Dans l'état de la technique, on connaît des méthodes de mesure des interfaces dans des matériaux observés par microscopie. En particulier, une technique appelée « Fast marching level sets » est décrite dans la demande de brevet publiée sous le numéro US2021/0263430 A1. Cette technique est basée sur l'algorithme « fast marching level sets » qui propage une interface mobile et déformable à partir d'un germe choisi jusqu'à ce que l'interface rencontre une discontinuité choisie. Cette technique est classiquement utilisée depuis très longtemps (Forcadel, N., Le Guyader, C. & Gout, C. Generalized fast marching method: applications to image segmentation. Numer Algor 48, 189-211 (2008)) pour déterminer la position des interfaces. La demande brevet US2023/0196189A1 de Carl Zeiss propose une métrologie 3D de semiconducteurs dans un FIB/SEM utilisant l'apprentissage machine. Un inconvénient potentiel de ces techniques est qu'elles ne permettent pas de distinguer les interfaces chimiques et structurelles de manière universelle. En outre, ces méthodes n'ont pas une résolution spatiale atomique et ne permettent pas d'enlever l'effet de la rugosité sur les mesures d'épaisseur des couches, alors que c'est indispensable pour les couches ultra-fines.

L'article « Learning-based defect recognition for quasi-periodic HRSTEM images" de Nik Dennler et al, publié le 3 mai 2021 dans Micron, Pergamon, propose l'utilisation d'un réseau de neurones et d'un banc de filtres convolutionnels générés automatiquement pour la reconnaissance de défait dans les images HRSTEM quasi-périodiques.

L'évolution des noeuds technologiques les plus avancés de l'ITRS (International Technology Roadmap for Semiconductors) engendre le besoin de localiser les interfaces avec une résolution plus fine, afin de mieux comprendre et optimiser les procédés d'élaboration des semiconducteurs, ainsi que les performances et la fiabilité.

A cet effet, l'invention propose, selon un aspect, un procédé de traitement de données multidimensionnelles de microscopie pour le positionnement d'interfaces entre zones homogènes structurellement d'un échantillon de matériau, comportant une acquisition d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions. Ce procédé comporte des étapes de :
- normalisation du pavé de données d'entrée pour obtenir un pavé de données normalisées, la normalisation comportant un ajustement du contraste du pavé de données d'entrée entre une valeur minimale et une valeur maximale prédéterminées ;
- segmentation du pavé de données normalisées permettant de déterminer un premier pavé de données représentatif d'une probabilité d'appartenance à une première zone homogène et un deuxième pavé de données représentatif d'une probabilité d'appartenance à une deuxième zone homogène à partir du pavé de données normalisées, tels que la somme point à point des valeurs du premier pavé de données et du deuxième pavé de données est égale à une même valeur ;
- calcul d'un pavé de données d'écart-type entre lesdits premier et deuxièmes pavés de données ;
- seuillage du pavé de données d'écart-type, pour obtenir l'interface structurelle entre la première zone homogène et la deuxième zone homogène.

Avantageusement, le procédé proposé permet de positionner une interface structurelle avec une très bonne précision, allant jusqu'à l'atome individuel, à partir d'une seule acquisition d'image plein champ, ce qui permet de l'appliquer avec des technologies d'acquisition rapides. Avantageusement, le procédé proposé est rapide et frugal en termes de consommation de ressources calculatoires. De plus, un autre avantage du procédé proposé est qu'il permet également de mesurer précisément les épaisseurs moyennes de couches les plus fines actuellement mesurables, c'est-à-dire d'épaisseur 1 monocouche atomique, même dans les coins. Avantageusement, le procédé s'applique même pour les hyperespaces (de dimensions supérieures à 3).

Suivant d'autres aspects avantageux de l'invention, le procédé de traitement de données multidimensionnelles de microscopie pour le positionnement d'interface entre zones homogènes structurellement comprend une ou plusieurs des caractéristiques suivantes, prises isolément ou suivant toutes les combinaisons techniquement possibles.

Le procédé comporte en outre une étape de rectification de l'interface structurelle, comportant un calcul d'une transformation permettant de transformer ladite interface structurelle en interface rectifiée, ladite transformation étant suivie d'une déformation continue élastique du pavé de données normalisées autour de l'interface rectifiée.

Le calcul d'une transformation est fonction, en deux dimensions, d'une pluralité de points positionnés sur une courbe dans l'interface structurelle.

Lorsque le nombre de dimensions est strictement supérieur à 2, le calcul d'une transformation est fonction d'une pluralité de points positionnés sur une hypersurface, ladite transformation étant une rectification de ladite hypersurface en un hyperplan.

La segmentation du pavé de données normalisées comporte en outre une segmentation du pavé de données normalisées en deux classes structurelles, respectivement une première classe structurelle et une deuxième classe structurelle, chaque classe correspondant à une structure homogène, ladite segmentation étant une segmentation par apprentissage machine sur une base de données de connaissances structurelles, ladite segmentation par apprentissage machine fournissant le premier pavé de données représentatif d'une probabilité d'appartenir à la première classe structurelle et le deuxième pavé de données représentatif d'une probabilité d'appartenir à la deuxième classe structurelle.

Le seuillage du pavé de données d'écart-type met en œuvre un seuil de valeur prédéterminée comprise de préférence entre 0,00001 % et 1% du maximum d'intensité du pavé de données d'écart-type.

Le seuillage du pavé de données d'écart-type met en œuvre un seuil de valeur déterminée dynamiquement, la valeur du seuil étant la plus petite valeur permettant d'obtenir une interface continue.

Le procédé comporte en outre un calcul d'un profil structurel associé à l'interface rectifiée par moyennage parallèlement à l'interface rectifiée.

Le procédé comporte en outre un calcul d'une épaisseur moyenne d'une zone d'intérêt à partir du profil structurel.

Selon un autre aspect, l'invention concerne un programme d'ordinateur comportant des instructions logicielles qui, lorsqu'elles sont exécutées par un ordinateur, mettent en œuvre un procédé de traitement de données multidimensionnelles de microscopie pour le positionnement d'interface entre zones homogènes structurellement tel que défini ci-dessus.

L'invention concerne également un dispositif de traitement de données multidimensionnelles de microscopie pour le positionnement d'interface entre zones homogènes structurellement d'un échantillon de matériau, comportant une acquisition d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions. Ce dispositif est configuré pour mettre en oeuvre :
- un module de normalisation du pavé de données d'entrée pour obtenir un pavé de données normalisées, la normalisation comportant un ajustement du contraste du pavé de données d'entrée entre une valeur minimale et une valeur maximale prédéterminées ;
- un module de segmentation du pavé de données normalisées permettant de déterminer un premier pavé de données représentatif d'une probabilité d'appartenance à une première zone homogène et d'un deuxième pavé de données représentatif d'une probabilité d'appartenance à une deuxième zone homogène à partir du pavé de données normalisées, tels que la somme point à point des valeurs du premier pavé de données et du deuxième pavé de données est égale à une même valeur ;
- un module de calcul d'un pavé de données d'écart-type entre lesdits premier et deuxièmes pavés de données, et de seuillage du pavé de données d'écart-type, pour obtenir l'interface structurelle entre la première zone homogène et la deuxième zone homogène.

L'invention apparaîtra plus clairement à la lecture de la description qui va suivre, donnée uniquement à titre d'exemple non limitatif, et faite en référence aux dessins dans lesquels :
- la figure 1 est un schéma-bloc d'un système de détection et de mesure d'interfaces dans un échantillon de matériau comportant un dispositif de traitement de données multidimensionnelles de microscopie selon un mode de réalisation ;
- la figure 2 est un synoptique des principales étapes d'un procédé de traitement pour la localisation d'interface entre zones homogènes d'un échantillon selon un mode de réalisation ;
- la figure 3 est un exemple de pavé de données d'entrée en deux dimensions ;
- la figure 4 illustre le résultat obtenu après l'étape d'homogénéisation (gauche) et de normalisation (droite) sur le pavé de données de la figure 3 ;
- la figure 5 illustre un exemple de résultats de segmentation et d'interface ;
- la figure 6 illustre un exemple d'interfaces avant et après rectification ;
- la figure 7 illustre le positionnement d'interfaces structurelles sur une image numérique d'exemple ;
- la figure 8 illustre une détermination des épaisseurs moyennes, à partir du profil des intensités moyennées sur toute la hauteur d'une image rectifiée comportant la position des interfaces.

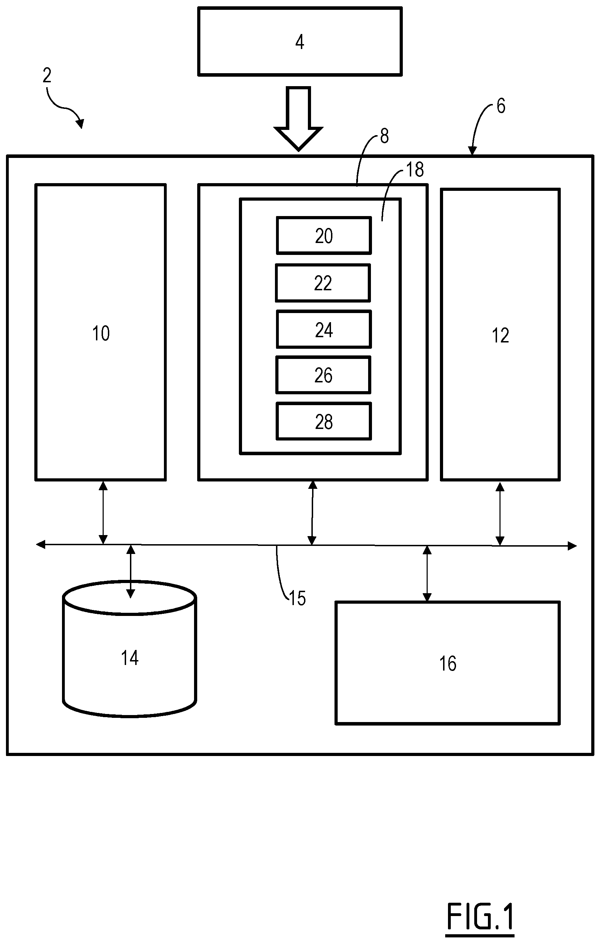

La **figure 1** illustre schématiquement un système 2 de détection et de mesure des interfaces dans un échantillon de matériau à partir de données multidimensionnelles représentatives de l'échantillon, acquises par une machine de caractérisation 4.

Toute technique de microscopie adaptée pour la caractérisation d'un tel échantillon est applicable.

Dans un mode de réalisation, la machine de caractérisation 4 est un microscope électronique en transmission (MET) qui permet d'acquérir des images d'un échantillon composé d'un ou plusieurs matériaux, comportant par exemple des matériaux cristallins.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté ou customisé), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Dans d'autre modes de réalisations, la machine de caractérisation 4 est un microscope de type sonde (AFM, STM, KFM), un imageur par fluorescence X, SAXS, SANS, XPS, basé sur l'absorption des rayons X, des neutrons, des fermions, ou des rayons alpha, béta, gamma, UV, visibles ; IR, millimétriques, radiofréquences, etc. Tout imageur où le contraste peut être relié à la position réelle des atomes via une simulation physique qui intègre les paramètres instrumentaux peut convenir (image SIMS et variantes, RBS, thermoluminescence, image de diffraction des rayons X, électrons, neutrons, fermions , positrons, etc.), tomographie électronique, tomographie RX, tomographie neutrons, PEEM, KPEEM, SEM, FIB, dual beam, fluorescence X, ICP-AES, imagerie Auger, imagerie optique, interférométrie, rugosimétrie, imagerie de photoluminescence, imagerie de spectrométrie Raman, imagerie par microscope ionique à effet de champs, imagerie par imagerie RMN, toute technique d'imagerie chimique et/ou structurelle générant des données de dimension supérieure ou égale à 1, les données étant reliées à une position réelle des atomes, par exemple par une simulation physique qui intègre les paramètres instrumentaux.

Chaque spectre ou image acquis est représenté sous forme d'image numérique, comportant des points ou pixels, chaque image étant représentative d'au moins une partie de l'échantillon observé.

Dans le cas des interfaces structurelles, il convient d'utiliser une méthode de caractérisation qui dispose d'une résolution spatiale suffisante pour obtenir cette information, par exemple une résolution atomique.

L'ensemble des spectres et images acquis forme un pavé de données à N dimensions, N étant un entier naturel supérieur ou égal à 2. Un tel pavé de données est également appelé « datacube ».

Dans un mode de réalisation, plusieurs spectres ou images sont acquis dans le temps, montrant une évolution de l'échantillon lors de l'analyse. Dans ce mode de réalisation, le temps est une dimension supplémentaire du pavé de données.

En complément, une autre dimension du pavé de données est la focalisation du microscope, l'énergie des électrons, un angle (de l'échantillon, de collection des électrons, de convergence de électrons), ou tout autre paramètre de réglage de la machine de caractérisation susceptible de varier de manière contrôlée durant la mesure.

Les données incomplètes peuvent éventuellement être extrapolées à partir des valeurs voisines le cas échéant, par exemple pour corriger les éventuelles imperfections rencontrées durant l'acquisition de données. En règle générale les mesures à l'échelle atomique sont très souvent entachées de défauts car un simple bruit acoustique ou électronique peut parfois les perturber.

Dans un pavé de données multidimensionnelles d'un échantillon cristallin, la maille forme usuellement un réseau régulier de gouttes représentatives de l'agencement des atomes. Les simulations sur la base de connaissances théoriques des matériaux cristallins permettent de prédire quels seront les pavés de données attendus pour un matériau donné et pour un réglage particulier de la machine de caractérisation.

Un pavé de données multidimensionnelles d'un échantillon observé est transmis à un dispositif 6 de traitement de données multidimensionnelles pour le positionnement des interfaces chimiques et/ou structurelles de l'échantillon.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 (CPU et/ou GPU) associé à des mémoires électroniques 10, de type RAM ou ROM ou SSD ou toutes celles connues par l'homme du métier. Optionnellement, le dispositif 6 est relié à un réseau de communication via une interface sécurisée dédiée, par exemple via une unité de communication 12.

Avantageusement, le dispositif 6 comporte ou est connecté à une base de connaissances 14. La base de connaissances 14 capitalise des données existantes pour chaque cas particulier d'interface. La base de connaissances est alimentée par les données des pavés de données précédemment enregistrés, et des zones d'interface préalablement détectées et validées.

En outre, optionnellement, la base de connaissances 14 est alimentée par les autres mesures réalisées sur l'échantillon, par les recettes d'élaboration qui permettent d'estimer la nature et les dimensions nominales attendues, par la conception assistée par ordinateur (CAO) qui définit les dimensions nominales des dispositifs par l'intermédiaire des masques réalisés lors de la conception (CAO) ou du design des dispositifs, par des informations provenant d'internet (données massives, bases de données, data mining, etc.), par des simulations, notamment prédictives, par des rapports et autres bases de données internes à l'entreprise, par des connaissances scientifiques et techniques publiées dans la littérature et les brevets, par des savoir-faire de communautés scientifiques et techniques humaines ou basées sur l'intelligence artificielle, par des échantillons de référence qui permettent d'extraire les valeurs de paramètres physiques (par exemple le numéro atomique moyen) au niveau d'interfaces abruptes de référence bien connues.

Le recoupement de toutes ces données permet d'estimer où sont attendues les interfaces chimiques et les interfaces structurelles.

En outre, le dispositif 6 comporte une interface homme-machine 16 ou lA-machine dans le cas d'intelligences artificielles dédiées dotées de capacités de communication autonomes (IA conversationnelles par exemple) comportant notamment un écran d'affichage de données ou un système plus avancé multidimensionnel de communication avec un utilisateur ou avec une intelligence artificielle.

Les éléments 8, 10, 12, 14 et 16 du dispositif 6 sont adaptés pour communiquer via un bus de communication 15 ou tout autre moyen d'échange de données de l'état de l'art, par exemple optique ou hyperfréquence.

Le processeur 8 (CPU ou GPU) est configuré pour exécuter un module 18 de traitement des données, pour mettre en œuvre le procédé de traitement de données multidimensionnelles de microscopie pour le positionnement d'interface entre zones homogènes chimiquement d'un échantillon de matériau.

Dans un mode de réalisation, le module 18 est mis en œuvre sous forme de programme d'ordinateur comportant des instructions logicielles qui, lorsqu'elles sont exécutées par un ordinateur, mettent en œuvre un procédé de traitement de données multidimensionnelles de microscopie pour le positionnement d'interface entre zones homogènes chimiquement et/ou structurellement d'un échantillon de matériau, tel que décrit plus en détail ci-après.

Le module 18 comporte notamment :
- un module 20 de normalisation du pavé de données d'entrée pour obtenir un pavé de données normalisées, la normalisation comportant un ajustement du contraste du pavé de données d'entrée entre une valeur minimale et une valeur maximale prédéterminées ;
- un module 22, optionnel, d'application d'un filtrage à préservation de contours sur les données du pavé de données normalisées pour obtenir un pavé de données normalisées homogènes ;
- un module 24 de segmentation du pavé de données normalisées ou, le cas échéant, des données normalisées, homogénéisées permettant de déterminer un premier pavé de données représentatif d'une première zone homogène et un deuxième pavé de données représentatif d'une deuxième zone homogène à partir du pavé de données normalisées, tels que la somme point à point des valeurs du premier pavé de données et du deuxième pavé de données est égale à une même valeur ;
- un module 26 de calcul d'un pavé de données d'écart-type entre lesdits premier et deuxièmes pavés de données, et de seuillage du pavé de données d'écart-type, pour obtenir l'interface structurelle entre la première zone homogène et la deuxième zone homogène ;
- un module 28 de rectification un calcul d'une transformation permettant de transformer l'interface structurelle en interface rectifiée, la transformation étant suivie d'une déformation continue élastique du pavé de données normalisées autour de l'interface rectifiée.

Le logiciel de traitement de données multidimensionnelles pour le positionnement des interfaces chimiques est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM, RRAM, PCRAM, NAND 2D, NAND 3D, SLC NAND, MLC NAND, TLC NAND, V-NAND, QLC), une carte magnétique ou une carte optique, un disque SSD, et toute variante connue par l'homme du métier dans le domaine du stockage numérique des données.

En variante non représentée, les modules 20, 22, 24, 26,28 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*).

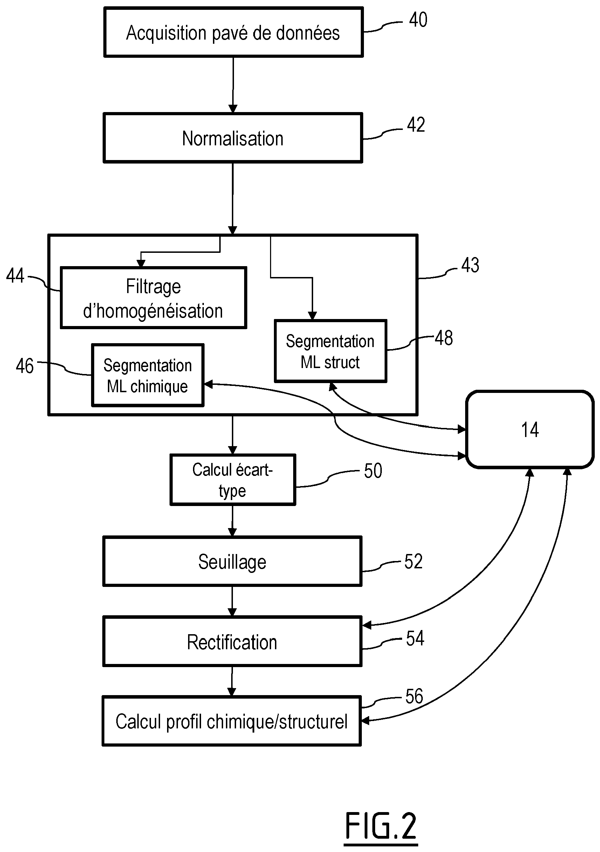

La **figure 2** est un synoptique des principales étapes d'un procédé de traitement de données multidimensionnelles de microscopie pour le positionnement des interfaces entre zones homogènes chimiquement et/ou structurellement d'un échantillon de matériau selon un mode de réalisation.

Le procédé comporte une étape 40 d'acquisition d'un pavé de données (d'images et de spectres) de microscopie à N dimensions, les données étant représentatives d'un échantillon de matériau cristallin observé, N étant un entier supérieur ou égal à 2. Les données du pavé de données sont obtenues par toute machine de caractérisation 4 telle que décrite ci-dessus.

Chaque donnée du pavé de données correspond à un point de l'espace à N dimensions, le point étant relié de manière calculable à la position des atomes dans le matériau,

Dans le cas particulier où N est égal à deux, chaque pavé de données multidimensionnelles est une image à deux dimensions (2D). Chaque donnée d'image (ou point de l'image, ou encore pixel) a une valeur numérique, ou intensité, représentée sur un nombre choisi de bits, par exemple 8,16, 32 ou 64.

Le terme image sera utilisé par la suite pour désigner les pavés de données 2D, étant entendu que les méthodes décrites s'appliquent de manière analogue pour les pavés de données à N dimensions, avec N supérieur à 2.

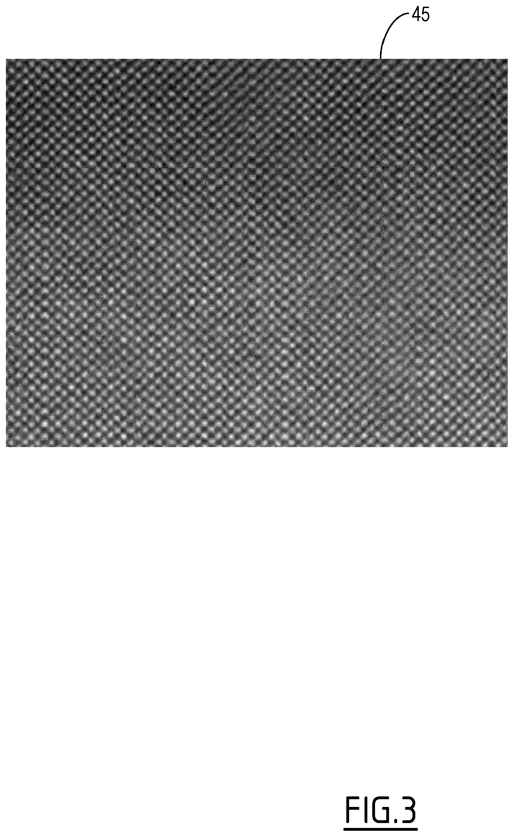

A titre d'exemple, une image numérique 45 représentative d'un pavé de données d'entrée avec N=2 est illustrée dans la figure 3, cette image étant l'image d'un échantillon de matériau dans laquelle les gouttes (taches claires) représentent des colonnes atomiques de cristaux. Comme on peut l'observer, un positionnement d'interface est particulièrement difficile.

Le procédé comporte une étape 42 de normalisation du pavé de données d'entrée pour obtenir un pavé de données normalisées.

L'étape de normalisation 42 comporte notamment un ajustement (ou normalisation) du contraste du pavé de données entre une valeur minimale Iₘᵢₙ et une valeur maximale Iₘₐₓ choisies dans la plage de valeurs possible, la valeur minimale Iₘᵢₙ étant par convention strictement inférieure à la valeur maximale Iₘₐₓ. Par exemple, pour un pavé de données comportant des valeurs codées sur 16 bits, le contraste maximal est réalisé pour Iₘᵢₙ=0 et Iₘᵢₓ=2¹⁶-1. L'homme du métier peut aisément calculer la plage de contraste maximal pour chaque type d'image. Pour réaliser un tel ajustement, une opération d'homothétie sur les valeurs numériques (ou intensités) de chaque point du pavé de données est appliquée.

De préférence, une soustraction de fond continu est appliquée également. Par exemple, la soustraction de fond continu comporte la soustraction du pavé de données obtenu après ajustement du contraste d'un pavé correspondant obtenu par lissage, par exemple par application d'un flou gaussien. Cela permet de soustraire les fluctuations lentes de contraste.

En variante, toute autre méthode de soustraction de flou continu connues de l'homme du métier est applicable, notamment parmi les méthodes décrites dans l'article « Traditional and recent approaches for background subtraction » de T.Bouwmans, publié dans Computer Science Review, en Mai 2014.

De manière optionnelle, le procédé comporte également une normalisation dimensionnelle, la distance médiane entre gouttes étant ramenée dans une plage de 2 à 12 pixels, par sous-échantillonnage, pour accélérer le traitement.

Le procédé comporte ensuite une étape 43 de segmentation du pavé de données normalisées pour déterminer une zone d'interface représentative d'une interface chimique ou d'une interface structurelle.

L'étape de segmentation 43 est spécialisée en deux voies de traitement distinctes, l'une des voies de traitement étant dédiée aux interfaces chimiques, et l'autre voie de traitement étant dédiée aux interfaces structurelles.

Pour déterminer l'interface chimique, dans le procédé de traitement de données multidimensionnelles pour la position d'interface entre zones chimiquement homogènes, l'étape de segmentation 43 comporte une sous-étape 44 d'application d'un filtrage à préservation de contours sur les données du pavé de données normalisées pour obtenir un pavé de données normalisées homogénéisées.

En d'autres termes, le filtrage 44 est un filtrage d'homogénéisation chimique. Avantageusement, le filtrage à préservation des contours préserve les interfaces entre zones chimiquement homogènes de l'échantillon observé.

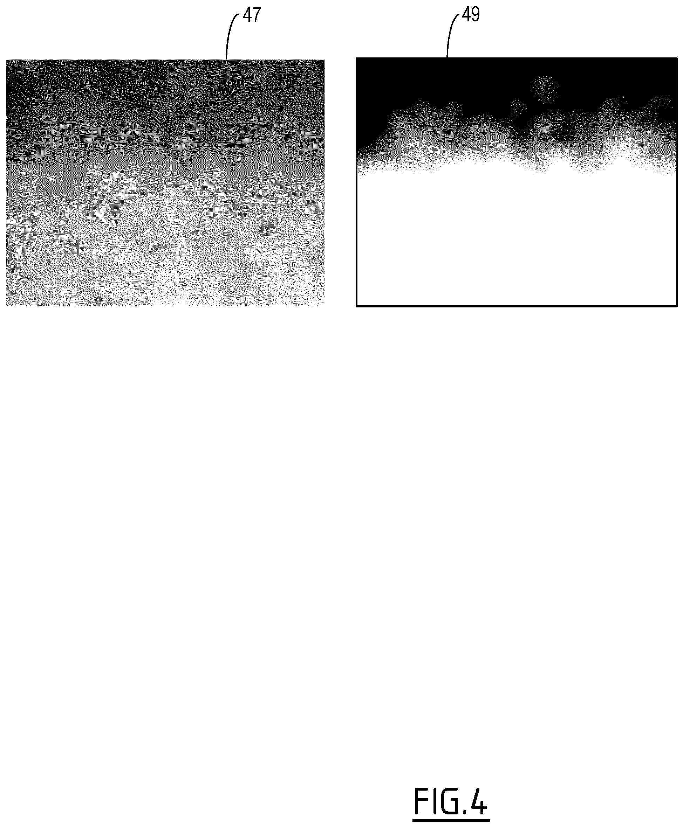

Dans un mode de réalisation, le filtrage 44 consiste à enlever les détails qui n'entrent pas dans la définition de l'interface chimique, par exemple les bruits numériques, les défauts de l'imageur, les éventuels artéfacts de mesure, etc. tout en préservant la position réelle des interfaces chimiques, par exemple avec un filtre bilatéral, ou médian éventuellement adaptatif, ou une diffusion isotrope, ou une diffusion anisotrope, ou un filtre Kuwahara, ou BEEPS. Par exemple, l'image 47 de la figure 4 a été obtenue avec un filtre de diffusion anomale isotrope avec 500 pas d'incrément 0.125, un paramètre de diffusion anomale Q=1 et un coefficient de diffusion généralisé de 1 en utilisant l'algorithme publié dans « Anomalous diffusion process applied to magnetic resonance image enhancement »

A C da S Senra Filho1, C E Garrido Salmon2 and L O Murta Junior1 Published 26 February 2015 • © 2015 Institute of Physics and Engineering in Medicine; Physics in Medicine & Biology, Volume 60, Number 6; Citation: A C da S Senra Filho et al 2015 Phys. Med. Biol. 60 2355; DOI 10.1088/0031-9155/60/6/2355. Ces techniques de filtrage sont publiés dans la littérature et sont généralement généralisables pour fonctionner aussi dans les hyperrespaces de dimension supérieure à 3.

De préférence, l'étape 44 comporte également, après l'application du filtrage à préservation des contours, un deuxième ajustement de contraste, de manière à pousser le contraste au maximum pour mieux distinguer les deux couches chimiquement homogènes. Cette étape consiste classiquement à saturer les niveaux de gris de part et d'autre de l'interface, blanc d'un côté, par exemple en bas et noir de l'autre côté de l'interface, par exemple en haut. Par transformation affine des intensités, toutes les valeurs supérieures au maximum deviennent blanches, et les valeurs inférieures au minimum deviennent noires.

La figure 4 illustre à titre d'exemple deux images numériques, respectivement l'image 47 correspondant au résultat obtenu après application d'un filtrage à préservation de contours sur l'image numérique 45, et une image numérique 49 obtenue après application de l'ajustement de contraste sur l'image numérique 45. En d'autres termes, l'image 49 est le pavé de données normalisées et homogénéisées obtenu à l'issue du filtrage 44.

Le pavé de données normalisées homogénéisées obtenu est alors segmenté (étape 46), de manière optionnelle, par apprentissage machine chimique. Cet apprentissage machine utilise au moins un point d'apprentissage, alimenté par la base de connaissances 14, cette base de données comportant des connaissances chimiques. Par exemple la recette de croissance des matériaux permet d'estimer de manière nominale où se trouvent chacune des couches du matériau, chaque couche étant chimiquement homogène. Cette information permet de trouver au moins une région qui correspond à un matériau connu.

Par exemple dans le cas de la figure 3, la croissance des matériaux a été réalisée pour obtenir 2 couches distinctes, ce qui permet d'avoir une première localisation de chaque couche. Donc pour lancer l'apprentissage machine sur les 2 classes, il suffit de délimiter au moins une région dans la zone supérieure pour la première classe, et au moins une autre région dans la zone inférieure pour définir la seconde classe.

Ensuite il convient d'appliquer un classifieur compatible avec les classes binaires et optimisé pour la segmentation chimique, par exemple de type bayésien (Bayesnet, naive Bayes, naive Bayes updatable, etc.), de type meta (AdaBoostM1, AttributeSelectedClassifier, Random Sub Space, ClassificationViaClustering, MultiClassClassifier, RandomCommittee, Bagging, Filtered Classifier, LogitBoost, MulticlassClassiferUpdatable, Treshold Selector, etc.), de type Rules (JRep, OneR, Part, etc.), de type trees (Decision Stump, ForestPA, J48, J48Graft, Random Forest, Random Tree, REP Tree, fast random forest, etc.). Ensuite en termes de famille de filtres de convolution associés, il est par exemple avantageux de sélectionner les filtres Gaussian blur, Mean, Max, Entropy, Variance, Minimum, Median, Bilateral, Structure, et Neighbors.

On obtient au final deux pavés de données qui représentent la probabilité d'appartenir à chacune des classes, respectivement un premier pavé de données représentatif de la probabilité à appartenir à la première classe et un deuxième pavé de données représentatif de la probabilité à appartenir à la deuxième classe. La somme des probabilités vaut 1 donc la somme point à point des valeurs du premier pavé de données et du deuxième pavé de données est égale à un.

Ainsi, pour N=2, chaque image obtenue est le négatif photographique de l'autre.

Plus généralement, en dimension N, le négatif photographique d'un premier pavé de données est un deuxième pavé de données, tels que la somme des valeurs, point à point, du premier pavé de données et du deuxième pavé de données est égale à une même valeur.

Pour gagner en précision statistique, il est avantageux de réaliser un pavé de données avec tous les résultats de classification pour chaque classifieur et de prendre la médiane de ce pavé de données pour obtenir le résultat le plus probable par combinaison de tous les résultats. Avec cette technique, la précision obtenue est maximale, mais demande évidemment plus de temps puisqu'il faut passer en revue plusieurs méthodes d'apprentissage machine. La statistique réalisée sur le pavé de données des résultats de classification permet d'évaluer la dispersion des résultats et la barre d'erreur sur le positionnement des interfaces. S'il existe de grandes différences entre toutes les méthodes d'apprentissage machine, alors c'est la médiane de tous les résultats qui est considérée comme la plus proche de la vérité.

En ce qui concerne la mesure des interfaces structurelles, dans le procédé de traitement de données multidimensionnelles pour le positionnement d'interface entre zones structurellement homogènes, l'étape de segmentation 43 comporte une segmentation 48 par apprentissage machine dédié structure, optimisé pour l'analyse des interfaces structurelles à partir du pavé de données normalisées.

Dans ce cas les données d'apprentissage sont des régions dont la structure est connue. L'apprentissage machine utilise la base de connaissances 14. Par exemple la recette de croissance des matériaux permet d'estimer de manière nominale où sont attendues chacune des couches. Cette information permet de trouver au moins un point qui correspond à une couche de matériau connu et structurellement homogène.

La segmentation 48 permet alors de classifier les points du pavé de données normalisées en deux classes, une première classe correspondant à la zone supérieure à l'interface et une deuxième classe correspondant à la zone inférieure à l'interface, chacune des classes étant représentative d'une couche structurellement homogène.

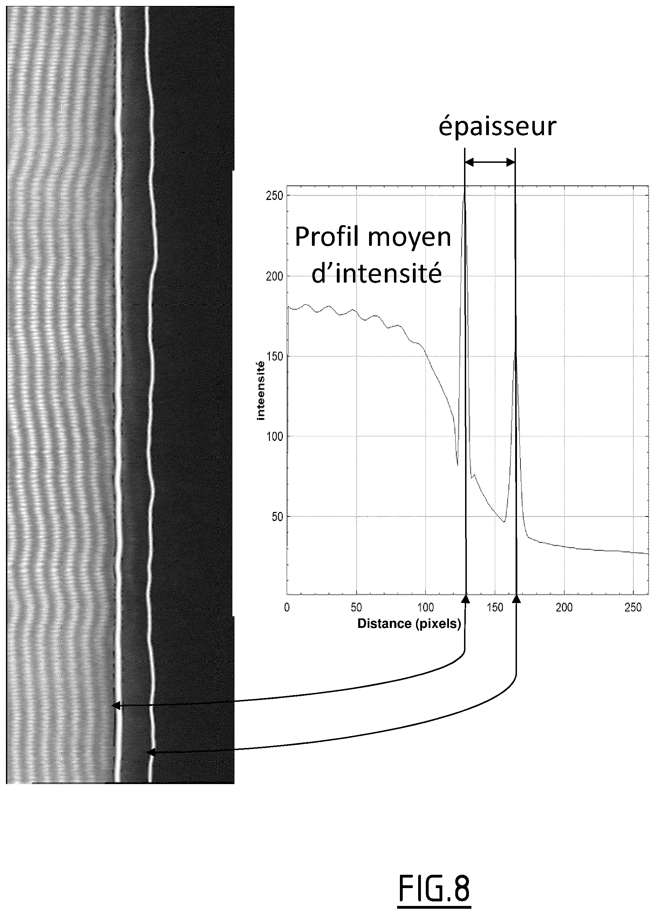

Par exemple dans le cas de la figure 8, la croissance des matériaux a engendré des macles de croissance, ce qui permet de de localiser chaque région autour des macles. Donc pour lancer l'apprentissage machine sur les 2 classes, il suffit de délimiter au moins une région dans la région au-dessus de la macle pour la première classe, et au moins un autre bloc dans la région en dessous de la macle pour définir la seconde classe.

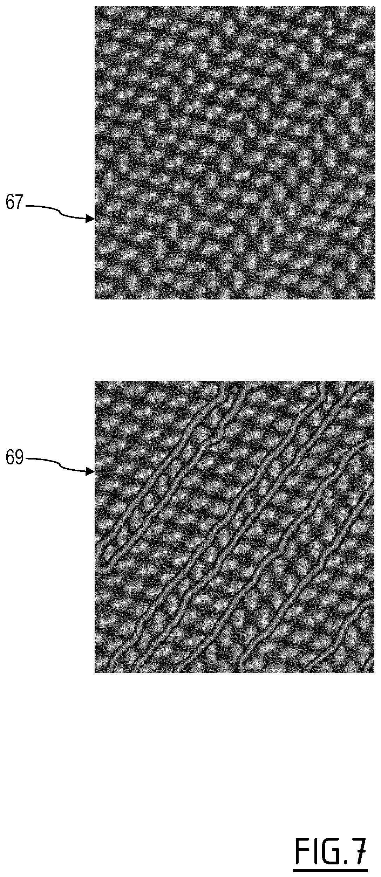

Dans le cas de l'image 67 de la figure 7, on constate qu'il existe 2 classes de structure, une avec des doublets de gouttes quasi horizontales, et l'autre avec des doublets de gouttes quasi verticales, donc il suffit de définir 2 classes et de positionner au moins une boite d'apprentissage supervisé par classe pour alimenter l'apprentissage machine.

En d'autres termes, l'étape de segmentation 48 permet d'obtenir un premier pavé de données représentatif d'une probabilité d'appartenance à la première classe (par exemple la classe avec des gouttes quasi horizontales) et un deuxième pavé de données représentatif d'une probabilité d'appartenance à la deuxième classe (par exemple, la classe avec des gouttes quasi verticales).

La somme des probabilités vaut 1 donc la somme point à point des valeurs du premier pavé de données et du deuxième pavé de données est égale à un.

Ainsi, pour N=2, chaque image obtenue est le négatif photographique de l'autre.

Plus généralement, en dimension N, le négatif photographique d'un premier pavé de données est un deuxième pavé de données, tels que la somme des valeurs, point à point, du premier pavé de données et du deuxième pavé de données est égale à une même valeur.

Pour la segmentation 48, le classifieur utilisé est spécialisé dans l'analyse de structure, par exemple de type Meta (AdaBoostM1, Bagging, LogitBoost, MultiClass Classifier, MultiClass Classifier Updatable, Random Comittee, Random SubSpace, Threshold Selector, etc.) , de type Rules ( JRip, PART, etc.), de type Tree (Decision Stump, J48, J48 graft, Random Forest, Random Tree, REP Tree, Fast Random Forest, etc.). Les filtres de convolution les plus efficaces qu'il est possible d'utiliser sont de type Hessian, Gabor, Kuwahara, derivatives, structure, neighbors, etc. Le test sur chaque cas particulier connu permet de progresser dans l'art d'apprendre le plus vite possible, par l'intermédiaire de la base de connaissances 14 qui regroupe non seulement les résultats de positionnement d'interfaces structurelles, mais également quelle est la méthode d'apprentissage machine qui a donné le meilleur résultat, le plus vite possible pour la classification structurelle. L'injection des résultats et de l'efficacité des méthodes de localisation des interfaces structurelles dans la base de connaissance est donc un moyen pour optimiser les variantes méthodologiques, de manière dynamique, pour chaque cas particulier.

Selon une autre variante, les méthodes de segmentation 48 par apprentissage machine mettent en œuvre un réseau de neurones, entraîné par apprentissage supervisé, par exemple un réseau de neurones convolutif CNN (pour « Convolutional Neural Networks ») ou un apprentissage de type « deep learning ».

Pour gagner en précision statistique, il est avantageux de réaliser un pavé de données avec tous les résultats de classification pour chaque classifieur et de prendre la médiane de ce pavé de données pour obtenir le résultat le plus probable par combinaison de tous les résultats. Avec cette technique, la précision obtenue est maximale, mais demande évidemment plus de temps puisqu'il faut passer en revue plusieurs méthodes d'apprentissage machine. La statistique réalisée sur le pavé de données des résultats de classification permet d'évaluer la dispersion des résultats et la barre d'erreur sur le positionnement des interfaces. S'il existe de grandes différences entre toutes les méthodes d'apprentissage machine, alors c'est la médiane de tous les résultats qui est considérée comme la plus proche de la vérité.

Le procédé comprend ensuite une étape 50 de calcul d'interface, qui met en œuvre le calcul d'un pavé d'écart-type standard point à point, entre le premier pavé de données et le deuxième pavé de données qui est son négatif photographique, ces pavés de données étant obtenus par l'étape de segmentation 43.

Dans le cas de la localisation d'interfaces entre zones chimiquement homogènes, l'écart-type est donc calculé à partir du résultat de la segmentation par apprentissage machine chimique 46 ou à partir du pavé constitué du pavé de données normalisées homogénéisées obtenu à l'étape 44, qui forme le premier pavé de données, et de son négatif photographique qui forme le deuxième pavé de données.

Dans le cas de la localisation d'interfaces entre zones structurellement homogènes, l'écart-type est donc calculé à partir du résultat de la segmentation par apprentissage machine structurel 48, entre le premier pavé de données contenant la probabilité d'appartenance à la première classe et le deuxième de données contenant la probabilité d'appartenance à la première classe.

L'écart type est un pavé de données dont l'intensité est calculée point par point avec la formule classique d'écart-type standard. L'écart type de 2 images est donc une image de même taille que les 2 autres.

Avantageusement, l'écart-type entre un premier pavé de données et un deuxième pavé de données qui est son négatif photographique (qu'on peut appeler également son inverse) donne toujours des valeurs minimales au voisinage de l'interface et les valeurs maximales autour, car au voisinage de l'interface les niveaux de gris sont les plus proches d'un niveau de gris moyen qui reste inchangé par inversion de contraste. Par contre loin des interfaces le blanc est transformé en noir par inversion de contraste donc l'écart type entre ces 2 valeurs extrêmes est maximal car par définition l'écart type est la moyenne quadratique des écarts par rapport à la moyenne. Au voisinage de l'interface, les niveaux de gris normalisés sont les plus proches d'un gris moyen, donc l'écart-type entre l'image et son inverse est minimal.

Un seuillage basique est ensuite réalisé à l'étape de seuillage 52, le seuillage étant appliqué sur le pavé d'écart-type. Par exemple, la valeur de seuil S est choisie entre 0,00001 % et 1% de l'intensité maximale du pavé segmenté, tous les points de valeur inférieure à la valeur de seuil S étant considérées comme faisant partie de l'interface, ou, en d'autres termes, appartenant à l'interface. Les points de valeur supérieure à la valeur de seuil S sont des points appartenant à l'une des zones homogènes. Plus le seuil S est petit, plus l'interface est fine. L'interface est la limite visible de la frontière entre les 2 zones quand S tend vers zéro.

Dans un cas d'application particulier illustré, la valeur de seuil est comprise entre 5 et 20.

Dans un mode de réalisation, la valeur du seuil S est ajustée dynamiquement à la plus petite valeur permettant d'obtenir une interface continue.

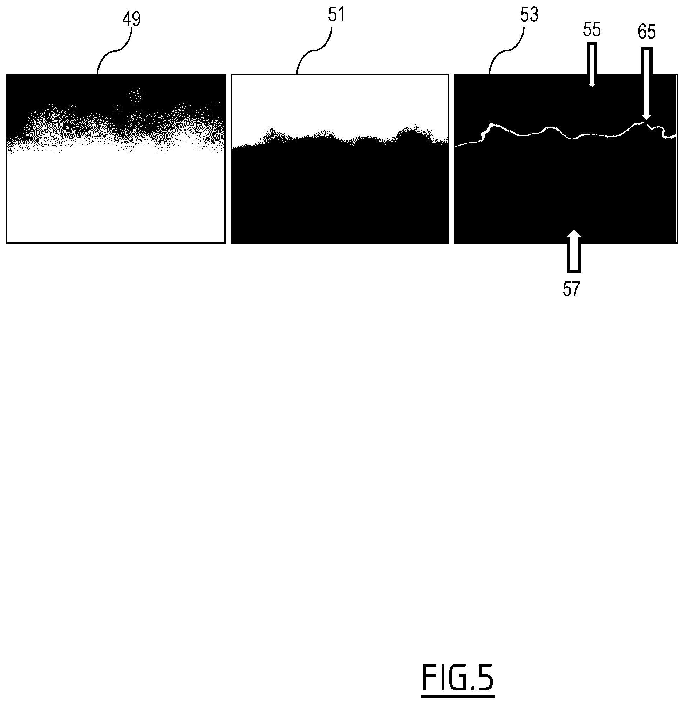

Comme illustré à titre d'exemple dans la figure 5, l'image numérique 49 correspond au pavé de données normalisées homogénéisées, l'image numérique 51 est le négatif photographique (ou inverse) de l'image numérique 49, et l'image numérique 53 comprend le résultat du seuillage 52 de l'écart type permettant de visualiser précisément une première zone homogène 55, une deuxième zone homogène 57 et l'interface 65 qui converge vers une ligne quand S tend vers zéro.

Une interface est donc une ligne en 2D.

En 3D, l'interface est une surface (par exemple la bulle de savon est l'interface entre l'intérieur et l'extérieur de la bulle). Ici toutes les notions classiques d'interface s'appliquent.

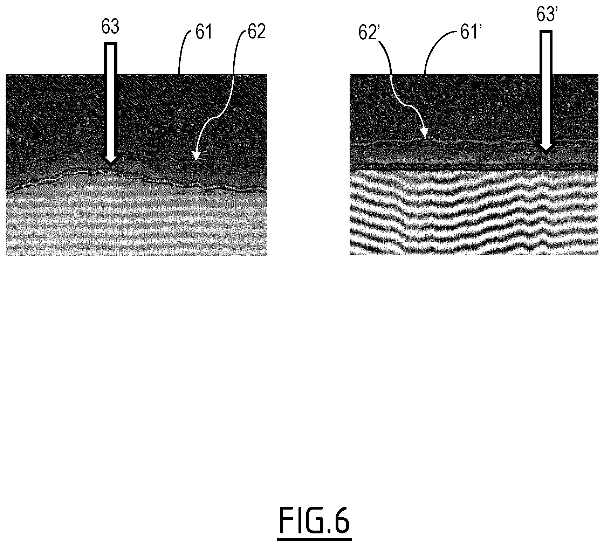

La première zone homogène 55 correspond à une première couche homogène de l'échantillon de matériau, et la deuxième zone homogène 57 correspond à une deuxième couche homogène du matériau et la frontière entre ces 2 régions est l'interface. Quand il existe 3 régions homogènes, alors on obtient 2 interfaces comme illustré dans la figure 6.

Il est évidemment possible de masquer les zones à éliminer en les remplaçant par du blanc ou du noir afin de simplifier la binarisation de l'image autour de l'interface, notamment dans le cas d'interfaces multiples. Au final on obtient une zone claire comportant des zones masquées blanches et une zone foncée comportant des zones masquées noires.

A titre d'exemple, la figure 6 illustre une image numérique 61 d'une couche fine sur GaN, sur laquelle une première interface 63 (interface inférieure) et une deuxième interface 62 (interface supérieure) obtenues après l'étape de seuillage 52.

Avantageusement, ces méthodes de segmentation chimiques et structurelles sont rapides, modulaires et faciles à intégrer dans des programmes plus complexes, et permettent d'obtenir des résultats de bonne précision grâce aux traitements préalables de normalisation du pavé de données d'entrée. Ces méthodes fonctionnent également dans les hyperespaces de dimension quelconque, en remplaçant la frontière curvilinéaire par son équivalent de type hypersurface.

Bien entendu, ce qui a été décrit ci-dessus pour deux couches s'applique de manière analogue à un plus grand nombre de couches, le procédé proposé permettant de déterminer des interfaces entre chaque paire de couches superposées.

Le procédé comprend en outre une étape 54 de rectification d'interface.

Dans le procédé de positionnement d'interface entre zones homogènes structurellement ; l'interface structurelle obtenue précédemment est rectifiée.

La rectification 54 comporte un calcul d'une transformation pour transformer une interface en un segment de droite, et plus généralement en une interface rectifiée. Le pavé de données est alors réorganisé par rapport à cette déformation imposée, comme si le pavé de données représentait un matériau continu déformable et élastique collé à cette interface rectifiée (ou interface de référence).

Pour cela, il est proposé d'ajuster une courbe polynomiale, également appelée spline, à partir d'un ensemble de points ajustables positionnés sur l'interface et d'utiliser par exemple l'algorithme développé par Eva Kocsis et coauteurs : « Averaging of Flexible Fibrous Macromolecules: The Clathrin Triskelion Has an Elastic Proximal Segment » Kocsis, E., Trus, B.L., Steer, C.J., Bisher, M.E. and Steven, A.C (1991) J. Struct. Biol. 107, 6-14.

Cette méthode se généralise mutatis mutandis aux hyperespaces en remplaçant la droite de rectification par l'hyperplan correspondant.

Un exemple est illustré à la figure 6. Dans le cas d'une couche d'oxyde très mince sur GaN (partie de gauche de la figure 6), le résultat obtenu après rectification est représenté sur la partie droite de la figure 6 : l'image numérique 61' est obtenue après rectification de l'interface 63, qui est transformée en l'interface rectifiée 63'. En zoomant sur la figure 6 gauche on peut voir en 63 les points utilisés pour obtenir la spline.

On constate qu'à l'issue de l'étape de rectification 54, l'interface 63 devient bien rectiligne (interface rectifiée 63') et toute l'image autour de cette interface est réorganisée par rapport à cette ligne désormais droite.

L'avantage de la rectification 54 est la suppression de l'effet de rugosité de l'interface.

Cet effet est obtenu dans le but de supprimer les irrégularités de topologie. Donc avec le traitement de rectification il est désormais possible de supprimer ces irrégularités et de moyenner l'épaisseur parallèlement à l'interface sur toute la région d'intérêt pour obtenir la valeur précise de l'épaisseur moyenne sans effet de rugosité (voir la partie de droite de la figure 8). En effet, la rugosité impacte fortement le résultat de mesure d'épaisseur moyenne car les oscillations d'interface conduisaient à une surépaisseur artificielle en l'absence de rectification.

En outre, cette même technique permet avantageusement de mesurer des épaisseurs moyennes dans les coins. Pour cela, il suffit de définir la spline de part et d'autre du coin (ou en d'autres termes, en longeant la forme du coin).

Ce traitement de rectification permet de lisser toutes les irrégularités de l'interface, tout en conservant l'information structurelle contenue dans le pavé de données.

La rectification peut s'effectuer également sur l'interface 62 (interface supérieure dans la figure 6) ou sur n'importe quelle interface, quelle que soit sa forme initiale.

Le traitement de rectification d'interface 54 permet en définitive d'obtenir le profil chimique ou structurel éventuellement corrigé des effets de topologie, par exemple pour des géométries complexes telles que les coins.

Les profils structurels permettent d'alimenter la base de connaissance 14 afin d'améliorer la reconnaissance automatisée des interfaces structurelles à l'issue d'un apprentissage ultérieur.

Le procédé comporte alors, après rectification 54, une étape 56 de calcul des profils des couches, par exemple des épaisseurs moyennes de couches, à partir de la moyenne des intensités du pavé parallèlement à l'interface rectifiée (figure 8, partie droite).

Dans un mode de réalisation, à l'étape 56 de calcul des profils moyens d'intensité, une épaisseur moyenne de la zone d'intérêt, située entre 2 interfaces, est calculée.

Pour les interfaces sont chimiques, alors on obtient l'épaisseur chimique.

Pour les interfaces sont structurelles, alors on obtient l'épaisseur structurelle.

Il est possible de combiner les natures d'interfaces pour obtenir d'autres épaisseurs utiles, par exemple les épaisseurs structurelles pour une chimie donnée.

Comme le montre la figure 8, en effectuant une moyenne sur la hauteur de l'image de gauche de la figure 8, on obtient le profil d'intensité qui permet de mesurer l'épaisseur entre les 2 interfaces matérialisées par des traits clairs. L'épaisseur est la distance entre les 2 pics sur la figure 8 droite qui représente l'intensité moyennée sur la hauteur de l'image.

Avantageusement, le procédé proposé permet de mesurer les épaisseurs moyennes de couches ultrafines (jusqu'à 1 monocouche), avec correction des effets de rugosité, même dans les coins.

De préférence, les résultats de l'étape 54 de rectification sont enregistrés dans la base de connaissances 14 en vue d'une amélioration dynamique de la base de connaissances.

De préférence, les paramètres de la méthode de segmentation chimique par apprentissage machine, et les paramètres de la méthode de segmentation structurelle par apprentissage machine sont mémorisés, par exemple dans les mémoires électroniques du dispositif électronique programmable 6.

Bien entendu, la détermination des interfaces chimiques d'une part, et structurelles d'autre part est applicable sur un même échantillon de matériau observé et à partir d'un même pavé de données. Avantageusement, la même base de connaissances 14 est partagée.

## Revendications

1. Procédé de traitement de données multidimensionnelles de microscopie pour le positionnement d'interface entre zones homogènes structurellement d'un échantillon de matériau, comportant une acquisition d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, comportant une normalisation (42) du pavé de données d'entrée pour obtenir un pavé de données normalisées, la normalisation comportant un ajustement du contraste du pavé de données d'entrée entre une valeur minimale et une valeur maximale prédéterminées , le procédé étant **caractérisé en ce qu'**il comporte en outre des étapes de :
- segmentation (43) du pavé de données normalisées permettant de déterminer un premier pavé de données représentatif d'une probabilité d'appartenance à une première zone homogène et un deuxième pavé de données représentatif d'une probabilité d'appartenance à une deuxième zone homogène à partir du pavé de données normalisées, tels que la somme point à point des valeurs du premier pavé de données et du deuxième pavé de données est égale à une même valeur ;
- calcul (50) d'un pavé de données d'écart-type entre lesdits premier et deuxièmes pavés de données ;
- seuillage (52) du pavé de données d'écart-type, pour obtenir l'interface structurelle entre la première zone homogène et la deuxième zone homogène.

2. Procédé selon la revendication 1, comportant en outre une étape de rectification (54) de l'interface structurelle, comportant un calcul d'une transformation permettant de transformer ladite interface structurelle en interface rectifiée, ladite transformation étant suivie d'une déformation continue élastique du pavé de données normalisées autour de l'interface rectifiée.

3. Procédé selon la revendication 2, dans lequel, en deux dimensions, le calcul d'une transformation est fonction d'une pluralité de points positionnés sur une courbe dans l'interface structurelle.

4. Procédé selon la revendication 2, dans lequel, lorsque le nombre de dimensions est strictement supérieur à 2, le calcul d'une transformation est fonction d'une pluralité de points positionnés sur une hypersurface, ladite transformation étant une rectification de ladite hypersurface en un hyperplan.

5. Procédé selon l'une des revendications 1 à 4, dans lequel la segmentation (43) du pavé de données normalisées comporte en outre une segmentation (48) du pavé de données normalisées en deux classes structurelles, respectivement une première classe structurelle et une deuxième classe structurelle, chaque classe correspondant à une structure homogène, ladite segmentation étant une segmentation par apprentissage machine sur une base de données de connaissances structurelles, ladite segmentation par apprentissage machine fournissant le premier pavé de données représentatif de la probabilité d'appartenir à la première classe structurelle et le deuxième pavé de données représentatif de la probabilité d'appartenir à la deuxième classe structurelle.

6. Procédé selon l'une quelconque des revendications 1 à 5, dans lequel ledit seuillage (52) du pavé de données d'écart-type met en œuvre un seuil de valeur prédéterminée comprise de préférence entre 0,00001 % et 1% du maximum d'intensité du pavé de données d'écart-type.

7. Procédé selon l'une quelconque des revendications 1 à 5, dans lequel ledit seuillage (52) du pavé de données d'écart-type met en œuvre un seuil de valeur déterminée dynamiquement, la valeur du seuil étant la plus petite valeur permettant d'obtenir une interface continue.

8. Procédé selon l'une quelconque des revendications 1 à 7, comportant en outre un calcul (56) d'un profil structurel associé à l'interface rectifiée par moyennage parallèlement à l'interface rectifiée.

9. Procédé selon la revendication 8, comportant en outre un calcul d'une épaisseur moyenne d'une zone d'intérêt à partir du profil structurel.

10. Programme d'ordinateur comportant des instructions logicielles qui, lorsqu'elles sont exécutées par un dispositif électronique programmable, mettent en œuvre un procédé de traitement de données multidimensionnelles de microscopie pour le positionnement d'interface entre zones homogènes structurellement conforme aux revendications 1 à 9.

11. Dispositif de traitement de données multidimensionnelles de microscopie pour le positionnement d'interface entre zones homogènes structurellement d'un échantillon de matériau, mettant en œuvre une acquisition d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le dispositif étant configuré pour mettre en œuvre :
- un module de normalisation (20) du pavé de données d'entrée pour obtenir un pavé de données normalisées, la normalisation comportant un ajustement du contraste du pavé de données d'entrée entre une valeur minimale et une valeur maximale prédéterminées , ledit dispositif étant **caractérisé en ce qu'**il est configuré en outre pour mettre en œuvre :
- un module de segmentation (24) du pavé de données normalisées permettant de déterminer un premier pavé de données représentatif d'une probabilité d'appartenance à une première zone homogène et d'un deuxième pavé de données représentatif d'une probabilité d'appartenance à une deuxième zone homogène à partir du pavé de données normalisées, tels que la somme point à point des valeurs du premier pavé de données et du deuxième pavé de données est égale à une même valeur ;
- un module (26) de calcul d'un pavé de données d'écart-type entre lesdits premier et deuxièmes pavés de données et de seuillage (26) du pavé de données d'écart-type, pour obtenir l'interface structurelle entre la première zone homogène et la deuxième zone homogène.

## Patentansprüche

1. Verfahren zur Verarbeitung multidimensionaler Mikroskopiedaten zur Positionierung einer Grenzfläche zwischen strukturell homogenen Bereichen einer Materialprobe, umfassend eine Erfassung mindestens eines Mikroskopiebildes der genannten Probe, das einen Eingabedatenblock bildet, wobei das oder jedes Bild des genannten Eingabedatenblocks einen Teil der beobachteten Probe darstellt, wobei der genannte Eingabedatenblock in einem N-dimensionalen Raum dargestellt ist, wobei N größer oder gleich zwei ist, wobei jede Datenwert des genannten Datenblocks einem Punkt des N-dimensionalen Raums entspricht, umfassend eine Normalisierung (42) des Eingabedatenblocks, um einen normalisierten Datenblock zu erhalten, wobei die Normalisierung eine Anpassung des Kontrasts des Eingabedatenblocks zwischen einem vorbestimmten Minimalwert und einem vorbestimmten Maximalwert umfasst, wobei das Verfahren **dadurch gekennzeichnet ist, dass** es außerdem folgende Schritte umfasst:
- Segmentierung (43) des normalisierten Datenblocks, die es ermöglicht, aus dem normalisierten Datenblock einen ersten Datenblock, der eine Wahrscheinlichkeit der Zugehörigkeit zu einem ersten homogenen Bereich darstellt, und einen zweiten Datenblock, der eine Wahrscheinlichkeit der Zugehörigkeit zu einem zweiten homogenen Bereich darstellt, zu bestimmen, derart, dass die punktweise Summe der Werte des ersten Datenblocks und des zweiten Datenblocks gleich demselben Wert ist;
- Berechnung (50) eines Datenblocks der Standardabweichung zwischen dem genannten ersten und dem genannten zweiten Datenblock;
- Schwellenwertbildung (52) des Datenblocks der Standardabweichung, um die strukturelle Grenzfläche zwischen dem ersten homogenen Bereich und dem zweiten homogenen Bereich zu erhalten.

2. Verfahren nach Anspruch 1, ferner umfassend einen Schritt der Berichtigung (54) der strukturellen Grenzfläche, umfassend eine Berechnung einer Transformation, die es ermöglicht, die genannte strukturelle Grenzfläche in eine berichtigte Grenzfläche zu transformieren, wobei der genannten Transformation eine kontinuierliche elastische Verformung des normalisierten Datenblocks um die berichtigte Grenzfläche herum folgt.

3. Verfahren nach Anspruch 2, wobei in zwei Dimensionen die Berechnung einer Transformation von einer Vielzahl von Punkten abhängt, die auf einer Kurve in der strukturellen Grenzfläche positioniert sind.

4. Verfahren nach Anspruch 2, wobei, wenn die Anzahl der Dimensionen strikt größer als 2 ist, die Berechnung einer Transformation von einer Vielzahl von Punkten abhängt, die auf einer Hyperfläche positioniert sind, wobei die genannte Transformation eine Berichtigung der genannten Hyperfläche in eine Hyperebene ist.

5. Verfahren nach einem der Ansprüche 1 bis 4, wobei die Segmentierung (43) des normalisierten Datenblocks ferner eine Segmentierung (48) des normalisierten Datenblocks in zwei strukturelle Klassen umfasst, nämlich eine erste strukturelle Klasse und eine zweite strukturelle Klasse, wobei jede Klasse einer homogenen Struktur entspricht, wobei die genannte Segmentierung eine Segmentierung durch maschinelles Lernen auf einer strukturellen Wissensdatenbank ist, wobei die genannte Segmentierung durch maschinelles Lernen den ersten Datenblock, der die Wahrscheinlichkeit der Zugehörigkeit zu der ersten strukturellen Klasse darstellt, und den zweiten Datenblock, der die Wahrscheinlichkeit der Zugehörigkeit zu der zweiten strukturellen Klasse darstellt, liefert.

6. Verfahren nach einem der Ansprüche 1 bis 5, wobei die genannte Schwellenwertbildung (52) des Datenblocks der Standardabweichung einen Schwellenwert eines vorbestimmten Werts verwendet, der vorzugsweise zwischen 0,00001 % und 1% der maximalen Intensität des Datenblocks der Standardabweichung liegt.

7. Verfahren nach einem der Ansprüche 1 bis 5, wobei die genannte Schwellenwertbildung (52) des Datenblocks der Standardabweichung einen dynamisch bestimmten Wertschwellenwert verwendet, wobei der Wert des Schwellenwerts der kleinste Wert ist, der es ermöglicht, eine kontinuierliche Grenzfläche zu erhalten.

8. Verfahren nach einem der Ansprüche 1 bis 7, ferner umfassend eine Berechnung (56) eines strukturellen Profils, das der berichtigten Grenzfläche zugeordnet ist, durch Mittelwertbildung parallel zu der berichtigten Grenzfläche.

9. Verfahren nach Anspruch 8, ferner umfassend eine Berechnung einer mittleren Dicke eines interessierenden Bereichs aus dem strukturellen Profil.

10. Computerprogramm, umfassend Softwareanweisungen, die, wenn sie durch eine programmierbare elektronische Vorrichtung ausgeführt werden, ein Verfahren zur Verarbeitung multidimensionaler Mikroskopiedaten zur Positionierung einer Grenzfläche zwischen strukturell homogenen Bereichen gemäß den Ansprüchen 1 bis 9 umsetzen.

11. Vorrichtung zur Verarbeitung multidimensionaler Mikroskopiedaten zur Positionierung einer Grenzfläche zwischen strukturell homogenen Bereichen einer Materialprobe, die eine Erfassung mindestens eines Mikroskopiebildes der genannten Probe umsetzt, das einen Eingabedatenblock bildet, wobei das oder jedes Bild des genannten Eingabedatenblocks einen Teil der beobachteten Probe darstellt, wobei der genannte Eingabedatenblock in einem N-dimensionalen Raum dargestellt ist, wobei N größer oder gleich zwei ist, wobei jede Datenwert des genannten Datenblocks einem Punkt des N-dimensionalen Raums entspricht, wobei die Vorrichtung dazu konfiguriert ist, Folgendes umzusetzen:
- ein Normalisierungsmodul (20) des Eingabedatenblocks, um einen normalisierten Datenblock zu erhalten, wobei die Normalisierung eine Anpassung des Kontrasts des Eingabedatenblocks zwischen einem vorbestimmten Minimalwert und einem vorbestimmten Maximalwert umfasst, wobei die genannte Vorrichtung **dadurch gekennzeichnet ist, dass** sie ferner dazu konfiguriert ist, Folgendes umzusetzen:
- ein Segmentierungsmodul (24) des normalisierten Datenblocks, das es ermöglicht, aus dem normalisierten Datenblock einen ersten Datenblock, der eine Wahrscheinlichkeit der Zugehörigkeit zu einem ersten homogenen Bereich darstellt, und einen zweiten Datenblock, der eine Wahrscheinlichkeit der Zugehörigkeit zu einem zweiten homogenen Bereich darstellt, zu bestimmen, derart, dass die punktweise Summe der Werte des ersten Datenblocks und des zweiten Datenblocks gleich demselben Wert ist;
- ein Modul (26) zur Berechnung eines Datenblocks der Standardabweichung zwischen dem genannten ersten und dem genannten zweiten Datenblock und zur Schwellenwertbildung (26) des Datenblocks der Standardabweichung, um die strukturelle Grenzfläche zwischen dem ersten homogenen Bereich und dem zweiten homogenen Bereich zu erhalten.

## Claims

1. Method for processing multidimensional microscopy data for positioning an interface between structurally homogeneous zones of a material sample, comprising acquiring at least one microscopy image of said sample forming an input data block, the or each image of said input data block being representative of a part of the observed sample, said input data block being represented in an N-dimensional space, N being greater than or equal to two, each datum of said block corresponding to a point of the N-dimensional space, comprising normalizing (42) the input data block to obtain a normalized data block, the normalization comprising adjusting the contrast of the input data block between a predetermined minimum value and a predetermined maximum value, the method being **characterized in that** it further comprises the steps of:
- segmenting (43) the normalized data block making it possible to determine a first data block representative of a probability of belonging to a first homogeneous zone and a second data block representative of a probability of belonging to a second homogeneous zone from the normalized data block, such that the point-by-point sum of the values of the first data block and of the second data block is equal to the same value;
- calculating (50) a standard deviation data block between said first and second data blocks;
- thresholding (52) the standard deviation data block, to obtain the structural interface between the first homogeneous zone and the second homogeneous zone.

2. Method according to claim 1, further comprising a step of rectifying (54) the structural interface, comprising calculating a transformation making it possible to transform said structural interface into a rectified interface, said transformation being followed by a continuous elastic deformation of the normalized data block around the rectified interface.

3. Method according to claim 2, wherein, in two dimensions, the calculation of a transformation is a function of a plurality of points positioned on a curve in the structural interface.

4. Method according to claim 2, wherein, when the number of dimensions is strictly greater than 2, the calculation of a transformation is a function of a plurality of points positioned on a hypersurface, said transformation being a rectification of said hypersurface into a hyperplane.

5. Method according to one of claims 1 to 4, wherein the segmentation (43) of the normalized data block further comprises segmenting (48) the normalized data block into two structural classes, respectively a first structural class and a second structural class, each class corresponding to a homogeneous structure, said segmentation being a machine-learning segmentation on a database of structural knowledge, said machine-learning segmentation providing the first data block representative of the probability of belonging to the first structural class and the second data block representative of the probability of belonging to the second structural class.

6. Method according to any one of claims 1 to 5, wherein said thresholding (52) of the standard deviation data block implements a predetermined-value threshold preferably between 0.00001% and 1% of the maximum intensity of the standard deviation data block.

7. Method according to any one of claims 1 to 5, wherein said thresholding (52) of the standard deviation data block implements a dynamically determined value threshold, the threshold value being the smallest value making it possible to obtain a continuous interface.

8. Method according to any one of claims 1 to 7, further comprising calculating (56) a structural profile associated with the rectified interface by averaging parallel to the rectified interface.

9. Method according to claim 8, further comprising calculating an average thickness of a region of interest from the structural profile.

10. Computer program comprising software instructions which, when executed by a programmable electronic device, implement a method for processing multidimensional microscopy data for positioning an interface between structurally homogeneous zones in accordance with claims 1 to 9.

11. Device for processing multidimensional microscopy data for positioning an interface between structurally homogeneous zones of a material sample, implementing an acquisition of at least one microscopy image of said sample forming an input data block, the or each image of said input data block being representative of a part of the observed sample, said input data block being represented in an N-dimensional space, N being greater than or equal to two, each datum of said block corresponding to a point of the N-dimensional space, the device being configured to implement:
- a normalization module (20) of the input data block to obtain a normalized data block, the normalization comprising adjusting the contrast of the input data block between a predetermined minimum value and a predetermined maximum value, said device being **characterized in that** it is further configured to implement:
- a segmentation module (24) of the normalized data block making it possible to determine a first data block representative of a probability of belonging to a first homogeneous zone and a second data block representative of a probability of belonging to a second homogeneous zone from the normalized data block, such that the point-by-point sum of the values of the first data block and of the second data block is equal to one same value;
- a module (26) for calculating a standard deviation data block between said first and second data blocks and for thresholding (26) the standard deviation data block, to obtain the structural interface between the first homogeneous zone and the second homogeneous zone.
